(19)

Europäisches Patentamt
European Patent Office
Office européen des brevets

(11) **EP 3 637 442 A1**

(12) **EUROPEAN PATENT APPLICATION**
published in accordance with Art. 153(4) EPC

(43) Date of publication:
**15.04.2020 Bulletin 2020/16**

(21) Application number: **18814363.0**

(22) Date of filing: **24.05.2018**

(51) Int Cl.:
*H01B 13/00* (2006.01)     *C01B 25/14* (2006.01)
*H01M 10/052* (2010.01)     *H01M 10/0562* (2010.01)

(86) International application number:
**PCT/JP2018/020047**

(87) International publication number:
**WO 2018/225526 (13.12.2018 Gazette 2018/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.06.2017   JP 2017114420
09.06.2017   JP 2017114421
09.06.2017   JP 2017114422**

(71) Applicant: **Idemitsu Kosan Co.,Ltd.
Tokyo 100-8321 (JP)**

(72) Inventors:
• **NAKATA, Akiko**
  **Sodegaura-shi**
  **Chiba 299-0293 (JP)**
• **MARUYAMA, Junpei**
  **Sodegaura-shi**
  **Chiba 299-0293 (JP)**
• **MONOI, Miki**
  **Sodegaura-shi**
  **Chiba 299-0293 (JP)**
• **HASHIMOTO, Ryohei**
  **Sodegaura-shi**
  **Chiba 299-0293 (JP)**

(74) Representative: **Vossius & Partner
Patentanwälte Rechtsanwälte mbB
Siebertstrasse 3
81675 München (DE)**

(54) **METHOD FOR PRODUCING SULFIDE SOLID ELECTROLYTE**

(57)     A method for producing a sulfide solid electrolyte comprising an argyrodite-type crystal structure, wherein phosphorus sulfide having a phosphorus content of 28.3 mass% or less and containing free sulfur is used as the raw material.

EP 3 637 442 A1

**Description**

Technical Field

The present invention relates to a method for producing a sulfide solid electrolyte.

Background Art

With the rapid spread of information-related devices and communication devices such as personal computers, video cameras, mobile phones in recent years, the development of batteries used as power sources thereof has been emphasized. Among the batteries, lithium ion batteries are attracting attention from the viewpoint of high energy density.

A liquid electrolyte comprising a flammable organic solvent is used in conventional lithium-ion batteries currently on the market. Therefore, conventional lithium-ion batteries need attachment of a safety device which suppresses a temperature rise during a short circuit, and improvements in structure and material to prevent a short circuit. On the other hand, it is thought that, since a lithium ion battery obtained by allowing a battery to be totally solid by using a solid electrolyte instead of liquid electrolyte does not use a flammable organic solvent in a battery, simplification of a safety device can be attained, and a production cost can be saved or productivity can be improved.

A sulfide solid electrolyte is known as a solid electrolyte used in a lithium-ion battery. While there are various known crystal structures of sulfide solid electrolytes, a stable crystal structure which is difficult to change in structure in a wide temperature range is suitable from the perspective of widening the use temperature area of a battery. In addition, there is a demand for a material having a high ionic conductivity. As such sulfide solid electrolytes, for example, sulfide solid electrolytes comprising an argyrodite-type crystal structures (see, for example, Patent Documents 1 to 5 and Non-Patent Document 1) have been developed.

Patent Document 6 also discloses a method for producing sulfide glass using a predetermined phosphorus sulfide as the raw material, which is identified by $^{31}$P-NMR spectrum analysis.

Related Art Documents

Patent Documents

Patent Document 1: JP 2010-540396 A
Patent Document 2: WO 2015/011937
Patent Document 3: WO 2015/012042
Patent Document 4: JP 2016-24874 A
Patent Document 5: WO 2016/104702
Patent Document 6: WO 2016/67631

Non-Patent Document

[Non-Patent Document 1] 82nd proceedings of the Institute of Electrical Engineers of Japan (2015), 2H08

Summary of the Invention

It is an object of the present invention to provide a method for producing a sulfide solid electrolyte comprising an argyrodite-type crystal structure exhibiting high ionic conductivity.

The present inventors confirmed by $^{31}$P-NMR spectrum analysis that phosphorus sulfide represented by a molecular formula such as $P_4S_9$ and $P_4S_7$, as well as diphosphine pentasulfide having a molecular formula of $P_4S_{10}$, is included in the generally available diphosphine pentasulfide. It was found that the ionic conductivity of the obtained sulfide solid electrolyte differs depending on the phosphorus content of phosphorus sulfide used as the raw material.

In addition, even when phosphorus sulfide having a phosphorus content deviating from a predetermined value is used as the raw material, it has been found that the ionic conductivity of the obtained sulfide solid electrolyte is improved by adding other phosphorus sulfide having a different phosphorus content and adjusting the phosphorus content of the entire phosphorus sulfide.

Further, it has been found that when the phosphorus content of phosphorus sulfide used as the raw material is high, the ionic conductivity of the obtained sulfide solid electrolyte is improved by adjusting the phosphorus content of phosphorus sulfide using elemental sulfur.

According to an embodiment of the present invention, there is provided a method for producing a sulfide solid electrolyte comprising an argyrodite-type crystal structure, wherein the phosphorus content is 28.3 mass% or less and phosphorus sulfide containing free sulfur is used as the raw material.

Further, according to an embodiment of the present invention, there is provided a method for producing a sulfide solid electrolyte comprising an argyrodite-type crystal structure using the raw material in which phosphorus sulfide is added with elemental sulfur and the phosphorus content based on the total mass of the phosphorus sulfide and the elemental sulfur is adjusted to 28.3 mass% or less.

According to an embodiment of the present invention, it is possible to provide a method for producing a sulfide solid electrolyte comprising an argyrodite-type crystal structure exhibiting high ionic conductivity.

Brief Description of the Drawings

Fig. 1 is a $^{31}$P-NMR spectrum of phosphorus sulfide A to E.
Fig. 2 is an XRD pattern of intermediates obtained in Examples 1 and 2, and Comparative Examples 1 to 3.
Fig. 3 is an XRD pattern of sulfide solid electrolytes obtained in Examples 1 and 2, and Comparative Examples 1 to 3.
Fig. 4 is an XRD pattern of intermediates obtained in Examples 7 and 8, and Comparative Example 3.
Fig. 5 is an XRD pattern of sulfide solid electrolytes obtained in Examples 7 and 8, and Comparative Example 3.
Fig. 6 is an XRD pattern of intermediates obtained in Examples 9 and 10, and Comparative Example 3.
Fig. 7 is an XRD pattern of sulfide solid electrolytes obtained in Examples 9 and 10, and Comparative Example 3.

Mode for Carrying out the Invention

[First Embodiment]

In the method for producing a sulfide solid electrolyte comprising an argyrodite-type crystal structure according to the first embodiment of the present invention, phosphorus sulfide having a phosphorus content of 28.3 mass% or less and containing free sulfur is used as the raw material.

Commercially available diphosphines pentasulfide include not only diphosphines pentasulfide whose molecular formula is $P_4S_{10}$, but also phosphorus sulfide represented by molecular formulae such as $P_4S_9$ and $P_4S_7$. Further, as the phosphorus content of phosphorus sulfide increases, the $P_4S_9$ contained in phosphorus sulfide tends to increase, and as the phosphorus content of phosphorus sulfide decreases, the $P_4S_9$ contained in phosphorus sulfide tends to decrease. Also, the higher the phosphorus content of phosphorus sulfide, the more free sulfur tends to be contained.

In the present embodiment, by using phosphorus sulfide having a low phosphorus content as the raw material, an intermediate of a sulfide solid electrolyte prior to heat treatment (burning) having a low content of $P_2S_6^{4-}$ structures can be obtained. When the content of $P_2S_6^{4-}$ structures contained in the intermediate is small, an impurity phase is hardly formed in the sulfide solid electrolyte obtained by heat treatment of the intermediate, and the sulfide solid electrolyte can have a high ionic conductivity. As the intermediate, a halo pattern indicating glass is observed in X-ray diffraction measurement. In addition to the halo pattern, the X-ray diffraction pattern of the intermediate may include a peak derived from the raw material and a peak derived from an argyrodite-type crystal.

In the present embodiment, the phosphorus sulfide used as the raw material contains free sulfur. This increases the ionic conductivity of the resulting sulfide solid electrolyte. The phosphorus sulfide preferably contains 0.2 to 2.5 mass% of free sulfur. The free sulfur is a elemental sulfur contained in phosphorus sulfide, and the content can be confirmed by high performance liquid chromatography (HPLC) as shown in the Examples.

The phosphorus content of phosphorus sulfide used as the raw material (phosphorus content relative to the total mass of phosphorus sulfide and free sulfur) may be 28.3 mass% or less, preferably 28.2 mass% or less, more preferably 28.0 mass% or less, still more preferably 27.8 mass% or less, and particularly preferably 27.7 mass% or less. Two or more phosphorus sulfides having a phosphorus content of 28.3 mass% or less may be used.

The lower limit of the phosphorus content of phosphorus sulfide is not particularly limited, but when the phosphorus content is too low, free sulfur may increase, 27.0 mass% or more may be preferable.

In the present application, the phosphorus content of phosphorus sulfide is obtained by correcting the phosphorus content of phosphorus sulfide measured by ICP-OES (Inductively Coupled Plasma Optical Emission Spectroscopy) with the content of sulfur atoms derived from free sulfur measured by HPLC, as shown in the Examples.

In the present embodiment, the phosphorus content can be adjusted by mixing two or more phosphorus sulfide having different phosphorus contents. When two or more phosphorus sulfide having different phosphorus contents are used as the raw material, an intermediate of a sulfide solid electrolyte having a small content of $P_2S_6^{4-}$ structures can be obtained, so that a sulfide solid electrolyte having a high ionic conductivity can be obtained.

Two or more phosphorus sulfides having different phosphorus contents used as the raw material are preferably phosphorus sulfide having a phosphorus content of more than 28.0 mass% and phosphorus sulfide having a phosphorus content of not more than 28.0 mass%, more preferably phosphorus sulfide having a phosphorus content of more than 28.2 mass% and phosphorus sulfide having a phosphorus content of not more than 27.9 mass%, still more preferably phosphorus sulfide having a phosphorus content of more than 28.3 mass% and phosphorus sulfide having a phosphorus content of not more than 27.8mass%, and particularly preferably phosphorus sulfide having a phosphorus sulfide having a phosphorus content of more than 28.4 mass% and phosphorus sulfide having a phosphorus content of not more than 27.7 mass%.

The lower limit of the phosphorus content of phosphorus sulfide is not particularly limited, but when the phosphorus content is too low, free sulfur may increase, so that it may be 27.0 mass% or more. Similarly, the upper limit of the phosphorus content of phosphorus sulfide is not particularly limited, but may be 29.0 mass% or less.

When phosphorus sulfide having a phosphorus content of 28.0 mass% or less is used as the phosphorus sulfide used as the raw material, the phosphorus sulfide preferably contains 0.2 to 2.5 mass% of free sulfur.

When phosphorus sulfide having a phosphorus content of more than 28.0 mass% is used as the phosphorus sulfide used as the raw material, the phosphorus sulfide is preferably not containing free sulfur. In the present application, "not containing free sulfur" means that the free sulfur content of phosphorus sulfide is less than 0.2 mass%, more preferably less than 0.15, and still more preferably less than 0.1 mass%.

[Second Embodiment]

The method for producing a sulfide solid electrolyte comprising an argyrodite-type crystal structure according to the second embodiment of the present invention uses the raw material in which phosphorus sulfide is added with elemental sulfur and the phosphorus content based on the total mass of phosphorus sulfide and elemental sulfur is adjusted to 28.3 mass% or less.

In the present embodiment, when phosphorus sulfide having a high phosphorus content is combined with elemental sulfur and used as the raw material, an intermediate of a sulfide solid electrolyte having a low content of $P_2S_6^{4-}$ structures can be obtained, and a sulfide solid electrolyte having a high ionic conductivity can be obtained.

The phosphorus content of phosphorus sulfide used as the raw material may be more than 28.3 mass%. When the phosphorus content is more than 28.3 mass%, the ionic conductivity of the obtained sulfide solid electrolyte tends to decrease. Therefore, the ionic conductivity of the obtained sulfide solid electrolyte can be improved by adding the elemental sulfur to the raw material so that the phosphorus content to the total mass of phosphorus sulfide and elemental sulfur is 28.3 mass% or less, for example. The phosphorus content of phosphorus sulfide may be more than 28.4 mass%, and phosphorus sulfide having a phosphorus content of 28.3 mass% or less may be used in accordance with the phosphorus content based on the total mass of phosphorus sulfide and elemental sulfur to be finally adjusted.

The upper limit of the phosphorus content of phosphorus sulfide is not particularly limited, but is, for example, 29.0 mass% or less.

In the present embodiment, the phosphorus sulfide used as the raw material is preferably not containing free sulfur.

The mixing ratio of phosphorus sulfide and elemental sulfur used as the raw material is preferably such that the phosphorus content (phosphorus/(phosphorus sulfide + elemental sulfur)) is 28.3 mass% or less based on the total mass of phosphorus sulfide and elemental sulfur. The content of phosphorus based on the total mass of phosphorus sulfide and elemental sulfur is preferably 28.0 mass% or less, more preferably 27.9 mass% or less, still more preferably 27.8 mass% or less, and particularly preferably 27.7 mass% or less.

In the first and second embodiment, the identification and content of each component (e.g., $P_4S_{10}$, $P_4S_9$ and $P_4S_7$) included in the phosphorus sulfide is determined by solution $^{31}$P-NMR spectrum analysis. $P_4S_{10}$ can be identified by peaks appearing in the range of 56.6 ppm or more and 57.1 ppm or less. $P_4S_9$ can be identified by peaks appearing in the range of 57.2 ppm or more and 58.3 ppm or less, and 63.0 ppm or more and 64.5 ppm or less. $P_4S_7$ can be identified by peaks appearing in the ranges of 84.0 ppm or more and 86.0 ppm or less, and 110.0 ppm or more and 113.0 ppm or less.

The content of each component (based on phosphorus: mol %) can be calculated by dividing the area of each peak by the sum of the peak areas of all peaks measured. The content of each component calculated as described above means the ratio of phosphorus contained in phosphorus sulfide to each component. In the present application, the area of each peak is represented as follows.

Area A: the sum of the peak areas of all peaks measured in the range of -201 ppm or more and 201 ppm or less observed in the $^{31}$P-NMR spectrum analysis

Area B: the peak area of peaks measured in the range of 57.2 ppm or more and 58.3 ppm or less, and 63.0 ppm or more and 64.5 ppm or less (derived from $P_4S_9$)

Area C: the peak area of peaks measured in the range of 56.6 ppm or more and 57.1 ppm or less (derived from $P_4S_{10}$)
Area D: the peak area of peaks measured in the range of 84.0 ppm or more and 86.0 ppm or less, and 110.0 ppm or more and 113.0 ppm or less (derived from $P_4S_7$)
Area $E_1$: the sum of the peak area measured in the range of 18.0 ppm or more and 20.0 ppm or less, 46.0 ppm or more and 49.0 ppm or less, 79.0 ppm or more and 81.0 ppm or less, and 90.0 ppm or more and 92.0 ppm or less (derived from PPS (phosphorus polysulfide: polymeric phosphorus sulfide of unknown structures))
Area $E_2$: the sum of the peak area of peaks measured in a range other than the range corresponding to B, C, D, and $E_1$ described above in the range of -201 ppm or more and 201 ppm or less

The sum of the areas of the peak areas of $E_1$ and $E_2$ is defined as the Area E.

In the case of using phosphorus sulfide having a phosphorus content of 28.3 mass% or less, it is preferable to use phosphorus sulfide satisfying the following formula (1) when the area of each peak is represented by the above as the raw material.

$$0 \leqq 100 \times B/A \leqq 46.0 \qquad (1)$$

Smaller B/A in the formula (1) means that the content of $P_4S_9$ in phosphorus sulfide as the raw material is low. It is estimated that the formation of $P_2S_6^{4-}$ structures can be suppressed by using phosphorus sulfide satisfying the formula (1) as the raw material.

In the present embodiment, it is preferable to satisfy the following formula (10), more preferably to satisfy the following formula (11), more preferably to satisfy the following formula (12), particularly preferably to satisfy the following formula (13), and most preferably to satisfy the following formula (14).

$$0 \leqq 100 \times B/A \leqq 40 \quad (10)$$

$$0.01 \leqq 100 \times B/A \leqq 40 \qquad (11)$$

$$0.1 \leqq 100 \times B/A \leqq 39 \qquad (12)$$

$$0.5 \leqq 100 \times B/A \leqq 35 \qquad (13)$$

$$1 \leqq 100 \times B/A \leqq 20 \quad (14)$$

It is preferable that phosphorus sulfide used as the raw material satisfy the following formula (2).

$$38.0 \leqq 100 \times C/A \leqq 100 \qquad (2)$$

Large C/A in the formula (2) means that the content of $P_4S_{10}$ in the raw material phosphorus sulfide is large. By using phosphorus sulfide satisfying the formula (2) as the raw material, the formation of $P_2S_6^{4-}$ structures can be suppressed.

In the present embodiment, it is preferable to satisfy the following formula (20), more preferably to satisfy the following formula (21), more preferably to satisfy the following formula (22), particularly preferably to satisfy the following formula (23), and most preferably to satisfy the following formula (24).

$$40 \leqq 100 \times C/A \leqq 100 \qquad (20)$$

$$45 \leqq 100 \times C/A \leqq 99.99 \qquad (21)$$

$$53 \leqq 100 \times C/A \leqq 99.9 \qquad (22)$$

$$57 \leqq 100 \times C/A \leqq 99.5 \qquad (23)$$

$$60 \leqq 100 \times C/A \leqq 99 \qquad (24)$$

It is preferable that phosphorus sulfide used as the raw material satisfy the following formula (3).

$$0 \leqq 100 \times D/A \leqq 3 \qquad (3)$$

D/A in the formula (3) means the content of $P_4S_7$ in phosphorus sulfide as the raw material. In the present embodiment, it is more preferable to satisfy the following formula (31), and in particular, it is preferable to satisfy the following formula (32).

$$0.01 \leqq 100 \times D/A \leqq 2.5 \qquad (31)$$

$$0.1 \leqq 100 \times D/A \leqq 2 \,(32)$$

It is preferable that phosphorus sulfide used as the raw material satisfy the following formula (4).

$$0 \leqq 100 \times E/A \leqq 20 \,(4)$$

E/A in the formula (4) means the content of a substance containing phosphorus other than $P_4S_9$, $P_4S_{10}$, $P_4S_7$ in phosphorus sulfide as the raw material. In the present embodiment, it is more preferable to satisfy the following formula (41), and in particular, it is preferable to satisfy the following formula (42).

$$0.01 \leqq 100 \times E/A \leqq 17 \qquad (41)$$

$$0.1 \leqq 100 \times E/A \leqq 15 \qquad (42)$$

It is preferable that phosphorus sulfide used as the raw material satisfy the following formula (5).

$$0 \leqq 100 \times E_1/A \leqq 10 \,(5)$$

$E_1/A$ in the formula (5) means the content of PPS in phosphorus sulfide as the raw material. In the present embodiment, it is more preferable to satisfy the following formula (51), and in particular, it is preferable to satisfy the following formula (52).

$$0.01 \leqq 100 \times E/A \leqq 8 \qquad (51)$$

$$0.1 \leqq 100 \times E/A \leqq 6 \,(52)$$

It is preferable that phosphorus sulfide used as the raw material satisfy the following formula (6).

$$0 \leqq 100 \times (B+D)/A \leqq 50.0 \quad (6)$$

By satisfying the formula (6), the generation of $P_2S_6^{4-}$ structures can be further suppressed. In the present embodiment, it is preferable to satisfy the following formula (60), more preferably to satisfy the following formula (61), still more preferably to satisfy the following formula (62), particularly preferably to satisfy the following formula (63), and most preferably to satisfy the following formula (64).

$$0 \leqq 100 \times (B+D)/A \leqq 45 \quad (60)$$

$$0.01 \leqq 100 \times (B+D)/A \leqq 42 \quad (61)$$

$$0.1 \leqq 100 \times (B+D)/A \leqq 40 \quad (62)$$

$$0.5 \leqq 100 \times (B+D)/A \leqq 35 \quad (63)$$

$$1 \leqq 100 \times (B+D)/A \leqq 20 \quad (64)$$

In the first embodiment and the second embodiment, phosphorus sulfide having a phosphorus content of 28.3 mass% or less, or phosphorus sulfide having a phosphorus content of 28.3 mass% or less and further satisfying any one or more of the above formulae (1) to (6) can be prepared by, for example, treating a commercially available product by a method such as a Soxhlet extracting method so as to increase $P_4S_{10}$ content. Phosphorus sulfide (sold as diphosphine pentasulfide) satisfying the above requirements may be selected from commercially available products. The phosphorus sulfide having a phosphorus content of more than 28.3 mass% is not particularly limited, and a commercially available product can be used. When the phosphorus content of phosphorus sulfide is high, the second embodiment may be applied.

The method for producing the sulfide solid electrolyte of the first embodiment may use phosphorus sulfide having a phosphorus content of 28.3 mass% or less, or a combination of two or more phosphorus sulfide having an overall phosphorus content of 28.3 mass% or less as the raw material, and as other raw materials and producing methods, a known raw material and producing method can be applied.

The method of producing the sulfide solid electrolyte of the second embodiment may use phosphorus sulfide and elemental sulfur as the raw material, and as other raw materials and producing methods, a known raw material and producing method can be applied.

As the raw material other than phosphorus sulfide, among elements contained in the argyrodite-type solid electrolyte as essential elements, that is, lithium, phosphorus and sulfur, and arbitrary elements such as halogen, it is preferable to use the raw material for supplying lithium and halogen other than phosphorus and sulfur.

Specifically, a compound containing lithium and optionally a compound containing halogen can be used.

Examples of the compound containing lithium include lithium sulfide ($Li_2S$), lithium oxide ($Li_2O$), and lithium carbonate ($Li_2CO_3$). Among these, lithium sulfide is preferable.

The lithium sulfide can be used without any particular limitation, but a lithium sulfide having a high purity is preferable. Lithium sulfide can be produced, for example, by the method described in JP H07-330312 A, JP H09-283156 A, JP 2010-163356 A, and JP 2011-84438 A.

Specifically, lithium hydroxide and hydrogen sulfide are reacted in a hydrocarbon-based organic solvent at 70 °C to 300 °C to form lithium hydrosulfide, and subsequently, hydrogen sulfide is removed from this reaction liquid, thereby to produce lithium sulfide (JP 2010-163356 A).

Further, by reacting lithium hydroxide and hydrogen sulfide in an aqueous solvent at 10 °C to 100 °C to form lithium hydrosulfide, and subsequently, hydrogen sulfide is removed from this reaction liquid, thereby to produce lithium sulfide (JP 2011-84438 A).

Examples of the compound containing halogens include, for example, a compound represented by the general formula ($M_l$-$X_m$).

In the formula, M indicates sodium (Na), lithium (Li), boron (B), aluminum (Al), silicon (Si), phosphorus (P), sulfur (S), germanium (Ge), arsenic (As), selenium (Se), tin (Sn), antimony (Sb), tellurium (Te), lead (Pb), bismuth (Bi), or each of the above elements to which an oxygen element or a sulfur element is bonded. Li or P is preferable, and lithium (Li) is particularly preferable.

X is a halogen element selected from the group consisting of F, Cl, Br, and I.

In addition, I is an integer of 1 or 2, and m is an integer of 1 to 10. When m is an integer of 2 to 10, that is, when a plurality of X are present, X may be the same or different. For example, in the case of $SiBrCl_3$ mentioned later, m is 4, and X are different elements, i.e. Br and Cl.

Specific examples of the halogen compound represented by the above formulae include sodium halide such as NaI, NaF, NaCl, or NaBr; lithium halide such as LiF, LiCl, LiBr, or LiI; boron halide such as $BCl_3$ $BBr_3$, $BI_3$; aluminum halide such as $AlF_3$, $AlBr_3$, $AlI_3$, $AlCl_3$; silicon halide such as $SiF_4$, $SiCl_4$, $SiCl_3$, $Si_2Cl_6$, $SiBr_4$, $SiBrCl_3$, $SiBr_2Cl_2$, $SiI_4$; phosphorus halide such as $PF_3$, $PF_5$, $PCl_3$, $PCl_5$, $POCl_3$, $PBr_3$, $POBr_3$, $PI_3$, $P_2Cl_4$, $P_2I_4$; sulfur halide such as $SF_2$, $SF_4$, $SF_6$, $S_2F_{10}$, $SCl_2$, $S_2Cl_2$, $S_2Br_2$; germanium halide such as $GeF_4$, $GeCl_4$, $GeBr_4$, $GeI_4$, $GeF_2$, $GeCl_2$, $GeBr_2$, $GeI_2$; arsenic halide such as $AsF_3$, $AsCl_3$, $AsBr_3$, $AsI_3$, $AsF_5$; selenium halide such as $SeF_4$, $SeF_6$, $SeCl_2$, $SeCl_4$, $Se_2Br_2$, $SeBr_4$; tin halide such as $SnF_4$, $SnCl_4$, $SnBr_4$, $SnI_4$, $SnF_2$, $SnCl_2$, $SnBr_2$, $SnI_2$; antimony halide such as $SbF_3$, $SbCl_3$, $SbBr_3$, $SbI_3$, $SbF_5$, $SbCl_5$; tellurium halide such as such as $TeF_4$, $Te_2F_{10}$, $TeF_6$, $TeCl_2$, $TeCl_4$, $TeBr_2$, $TeBr_4$, $TeI_4$; lead halides such as $PbF_4$, $PbCl_4$, $PbF_2$, $PbCl_2$, $PbBr_2$, $PbI_2$; bismuth halide such as $BiF_3$, $BiCl_3$, $BiBr_3$, $BiI_3$; and the like.

Among these, lithium halide or phosphorus halide is preferable, and LiCl, LiBr, LiI or $PBr_3$ is more preferable, LiCl, LiBr or LiI is still more preferable, and LiCl or LiBr is particularly preferable.

One of the kinds of halogen compounds described above may be used alone, or a combination of two or more kinds may be used.

The above-mentioned raw materials can be used without any particular limitation as long as they are produced industrially and sold, and are preferably of high purity.

In the first embodiment, the raw material is preferably a combination of a compound containing lithium, phosphorus sulfide and a compound containing halogen, more preferably a combination of lithium sulfide, phosphorus sulfide and lithium halide, and still more preferably a combination of lithium sulfide, phosphorus sulfide, and lithium halide of two or more kinds.

When lithium sulfide, phosphorus sulfide, and lithium halide are used as the raw material, the molar ratio of the input raw material is preferably 40 to 60: 10 to 20: 25 to 50 of lithium sulfide: phosphorus sulfide: lithium halide. When lithium chloride and lithium bromide are used as lithium halide of the raw material, the molar ratio of lithium sulfide: phosphorus sulfide: total of lithium chloride and lithium bromide of the raw material is preferably 45 to 55: 10 to 15: 30 to 50, more preferably 45 to 50: 11 to 14: 35 to 45, and particularly preferably 46 to 49: 11 to 13: 38 to 42. The molecular formula of phosphorus sulfide is calculated in molar amounts as $P_2S_5$. When two or more kinds of phosphorus sulfide are used, it is the total molar amount of phosphorus sulfide.

In the second embodiment, the raw material is preferably a combination of a compound containing lithium, and a compound containing phosphorus sulfide, elemental sulfur, and halogen, more preferably a combination of lithium sulfide, phosphorus sulfide, elemental sulfur, and lithium halide, and more preferably a combination of lithium sulfide, phosphorus sulfide, elemental sulfur, and two or more kinds of lithium halide.

When lithium sulfide, phosphorus sulfide, elemental sulfur and lithium halide are used as the raw material, the molar ratio of lithium sulfide: phosphorus sulfide: elemental sulfur: lithium halide of the input raw material may be 40 to 60: 10 to 20: 0.5 to 10: 25 to 50. When lithium chloride and lithium bromide are used as the lithium halide of the raw material, the molar ratio of lithium sulfide: phosphorus sulfide: elemental sulfur: lithium chloride and lithium bromide of the raw material is preferably 45 to 55: 10 to 15: 0.5 to 5: 30 to 50, more preferably 45 to 50: 11 to 14: 0.5 to 4: 35 to 45, and still more preferably 46 to 49: 11 to 13: 0.5 to 3: 38 to 42. The molecular formula of phosphorus sulfide is calculated in molar amounts as $P_2S_5$.

In the first embodiment and the second embodiment, the raw material may be reacted by applying mechanical stress to the raw material to form an intermediate. Herein, "applying mechanical stress" is to mechanically apply shear stress, impact force, or the like. As means for applying a mechanical stress, a pulverizer such as a planetary ball mill, a vibration mill and a rolling mill, a kneader, etc. can be given. In these apparatuses, intermediates are obtained by pulverizing and mixing raw materials. The intermediate can also be obtained by heating a mixture of raw materials. In this case, the heating temperature is lower than a temperature described later at which an intermediate is subjected to heat treatment.

As a condition, for example, when a planetary ball mill is used as a pulverizer, the rotational speed may be set to several tens to several hundreds of revolutions per minute and the treatment may be performed for 0.5 hours to 100 hours. More specifically, in the case of the planetary ball mill (Model No. P-5, manufactured by Fritsch Co.) used in the Examples, the rotation speed of the planetary ball mill is preferably 200 rpm or more and 250 rpm or less, more preferably 210 rpm or more and 230 rpm or less.

For example, when a zirconia ball is used, the diameter of the ball as the grinding medium is preferably 0.2 to 20 mm.

The pulverizing and mixing may be carried out by dry mixing without using a solvent, or may be carried out by wet mixing using a solvent. In the case of wet mixing, it is preferable to treat so that the sulfur component is not removed together with the solvent. For example, it is preferable not to decant when separating the solvent and the intermediate.

The intermediate produced by pulverizing and mixing may be heat treated to produce a sulfide solid electrolyte. The heat treatment temperature is preferably 350 to 650 °C, more preferably 360 to 500 °C, and particularly preferably 420 to 470 °C.

Atmosphere of the heat treatment is not particularly limited, but is preferably atmosphere not under hydrogen sulfide airflow but under an inert gas such as nitrogen, argon, or the like.

Examples of the argyrodite-type crystal structure include crystal structures disclosed in Patent Documents 1 to 5 and the like. Examples of the compositional formula include $Li_6PS_5X$, $Li_{7-x}PS_{6-x}X_x$ (X=Cl, Br, I, x=0.0 to 1.8).

It can be confirmed by powder X-ray diffraction using CuKa rays that the produced solid electrolyte has an argyrodite-type crystal structure, for example. The argyrodite-type crystal structure has strong diffraction peaks at $2\theta = 25.2\pm0.5$ deg and $29.7\pm0.5$ deg. The diffraction peak of the argyrodite-type crystal structure may appear, for example, at $2\theta = 15.3\pm0.5$ deg, $17.7\pm0.5$deg, $31.1\pm0.5$ deg, $44.9\pm0.5$ deg, or $47.7\pm0.5$ deg. The sulfide solid electrolyte of an embodiment of the present invention may have these peaks.

As long as the sulfide solid electrolyte has an X-ray diffraction pattern of the above-mentioned argyrodite-type crystal structure, an amorphous component may be contained in a part thereof. The amorphous component indicates a halo pattern in which the X-ray diffraction pattern does not substantially indicate peaks other than a peak derived from the raw material in the X-ray diffraction measurement. Moreover, a crystal structure other than the argyrodite-type crystal structure, and raw materials may be comprised.

Examples

The present invention is described below in more detail by Examples.

[Phosphorus sulfide]

Nine kinds of phosphorus sulfide (phosphorus sulfide A to I) were prepared, and the following (1), (2) and (3) were evaluated.

(1) Types of phosphorus sulfide constituents and contents of each constituent (based on phosphorus)

Solutions $^{31}$P-NMR were performed, and the types of constituents contained in the prepared phosphorus sulfide and the contents of each constituent (based on phosphorus) were calculated by spectral analysis. The content of each component calculated as described above means the ratio of phosphorus contained in phosphorus sulfide to each component.

To 20mg of the sample, 10.5mL of carbon disulfide (special dehydration grade manufactured by Sigma-Aldrich Co. LLC) was added and completely dissolved. In addition, 1.5mL of benzene-d6 (99.6 Atom% manufactured by Isotech, Inc.) was added and stirred. 0.7mL of the resulting solution was loaded into an NMR sample tube. The equipment and conditions were as follows.

Equipment: ECA-500NMR Equipment (manufactured by JEOL RESONANCE Inc.)
Observation nucleus: $^{31}$P
Observation frequency: 200.43 MHz
Measurement temperature: room temperature
Pulse sequence: single pulse (using 30° pulse)
90° pulse width: 11.4 $\mu$s
Waiting time after FID measurement until the next pulse application :20 s
Number of integrations 2048 times

In the above analysis, the chemical shift was obtained by using a deuterium solution of 85% phosphoric acid (chemical shift 0 ppm) as an external reference. The measurement range was -201 ppm to 201 ppm.

In the present application, the amount of phosphorus sulfide (mol) was calculated by the molecular weight of $P_2S_5$.

The content of each component was calculated from the proportion (%) of the area of each peak in the total peak area of the $^{31}$P-NMR spectrum.

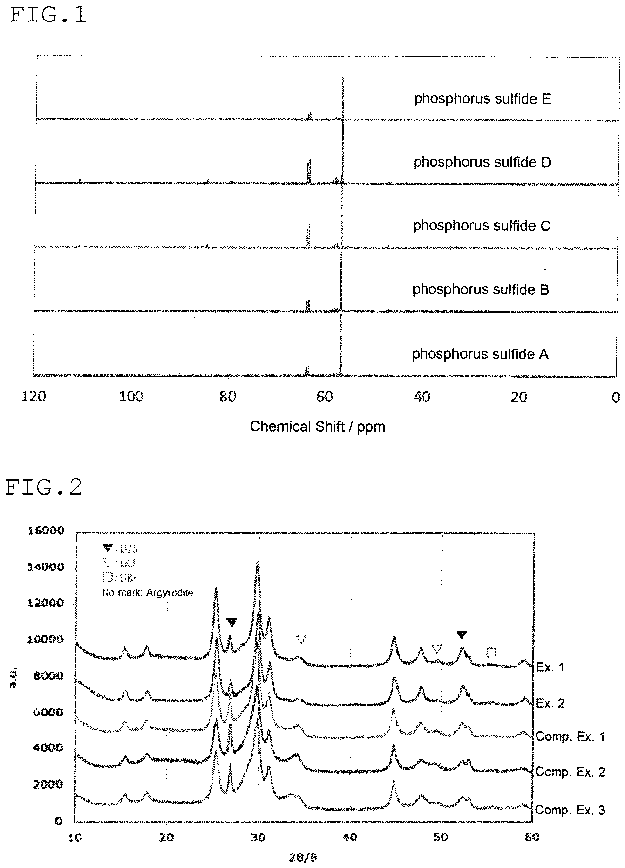

The assignment of the peaks is shown in Table 1, and the content of each component is shown in Table 2. The $^{31}$P-NMR spectra are shown in Fig. 1.

From the results of the analysis, it can be confirmed that the diphosphine pentasulfide of A to I contains not only the diphosphine pentasulfide of the molecular formula $P_4S_{10}$ but also other phosphorus sulfide such as $P_4S_9$. In addition, it is generally considered that, as a sum of these, a phosphorus and sulfur having a molar ratio close to 2:5 is called diphosphine pentasulfide.

**Table 1**

| peak position [ppm] | assignment | peak area indication | content [mol%] |
|---|---|---|---|
| 57.2~58.3. 63~64.5 | $P_4S_9$ | B | $100 \times B/A$ |
| 56.6~57.1 | $P_4S_{10}$ | C | $100 \times C/A$ |
| 84~86, 110~113 | $P_4S_7$ | D | $100 \times D/A$ |
| 18~20, 46~49, 79~91, 90~92 | Phosphorus Poly-sulfides | $E_1$ | $100 \times E/A$ ($100 \times (E1+E2)/A$) |
| Other than those above | unknown | $E_2$ | |
| -201~201 | all | A | 100 |

Table 2

| | | phosphorus sulfide | | | | |
|---|---|---|---|---|---|---|
| | | A | B | C | D | E |
| $P_4S_9$ | $100 \times B/A$ | 38.6 | 39.4 | 40.8 | 44.7 | 45 |
| $P_4S_{10}$ | $100 \times C/A$ | 55.5 | 43.7 | 40.5 | 44.6 | 51.7 |
| $P_4S_7$ | $100 \times D/A$ | 0 | 1.3 | 2.6 | 3.2 | 3.3 |
| $P_4S_9 + P_4S_7$ | $100 \times (B+D)/A$ | 38.6 | 40.7 | 43.4 | 47.9 | 48.3 |
| Phosphorus Poly-Sulfides | $100 \times E_1/A$ | 3.7 | 7.5 | 7.4 | 6.7 | 0 |
| unknown | $100 \times E_2/A$ | 2.2 | 8.1 | 8.7 | 0.8 | 0 |

| | | phosphorus sulfide | | | |
|---|---|---|---|---|---|
| | | F | G | H | I |
| $P_4S_9$ | $100 \times B/A$ | 29.4 | 28.6 | 45.9 | 41.3 |
| $P_4S_{10}$ | $100 \times C/A$ | 70.6 | 71.4 | 38.3 | 40.3 |
| $P_4S_7$ | $100 \times D/A$ | 0 | 0 | 2.5 | 1.8 |
| $P_4S_9 + P_4S_7$ | $100 \times (B+D)/A$ | 29.4 | 28.6 | 48.4 | 43.1 |
| Phosphorus Poly-Sulfides | $100 \times E_1/A$ | 0 | 0 | 7.8 | 7.8 |
| unknown | $100 \times E_2/A$ | 0 | 0 | 5.5 | 8.8 |

The value in the table is the ratio (mol%) of phosphorus contained in phosphorus sulfide to each component.

(2) Phosphorus content

The phosphorus content of phosphorus sulfide was measured by ICP-OES and HPLC. Since sulfur atoms derived from elemental sulfur (free sulfur) cannot be detected by ICP-OES, the content of sulfur atoms derived from free sulfur was measured by HPLC, and the phosphorus content measured by ICP-OES was corrected.

(A) Determination of phosphorus content of phosphorus sulfide by ICP-OES

• Preparation of calibration curve solution

A mixed standard solution simultaneously containing phosphorus P (concentration: 120 ppm) and sulfur S (concentration: 280 ppm) was prepared using P standard solution (manufactured by GL Sciences Inc., 1,000 μg/mL $NH_4H_2PO_4$) and S standard solution (manufactured by GL Sciences Inc., 1,000 μg/mL $(NH_4)_2SO_4$).

Subsequently, four calibration curve solutions S0 to S3 were prepared so as to obtain the respective set concentrations by using the mixed standard solution. Table 3 shows the concentration of each calibration curve solution. A certain amount of 0.1M KOH aqueous solution was added so that the KOH content was 0.01M at the time of preparation. "ppm" means "ppm by mass."

**Table 3**

|  | S0 | S1 | S2 | S3 |
|---|---|---|---|---|
| P concentration (ppm) | 0 | 9.60 | 14.4 | 19.2 |
| S concentration (ppm) | 0 | 22.4 | 33.6 | 44.8 |

• Preparation of sample solution

About 0.1g of each phosphorus sulfide powder of sample was dissolved using 0.5M of KOH, and then brought to 50mL (solution A). Subsequently, 2mL of solution A was collected, and 1mL of hydrogen peroxide was added thereto, followed by diluting up to 100mL to prepare a measurement sample solution (solution B). The KOH concentration in solution B, which is the measurement solution, is 0.01M.

• ICP-OES measurements

Calibration curve solutions simultaneously containing P and S were introduced into the ICP-OES in the order of S0, S1, S2, and S3, and the respective calibration curves were prepared. After the calibration curve was prepared, the sample solution was introduced into the ICP-OES, and P and S were measured.

Analysis line washes between samples used 0.01M aqueous KOH solution similar to S0 (line wash times were 20 seconds per each).

The measurement condition of ICP-OES was as follows.

Equipment: SPECTRO ARCOS SOP (manufactured by Spectro)

High frequency output: 1400 W

Plasma gas flow rate: 13 L/min

Auxiliary gas flowrate :1 L/min

Nebulizer gas flow rate: 0.9 L/min

Wavelength: P 177.495 nm, S 180.731 nm

• Calculation of phosphorus content (P mass%)

The concentrations of P and S (Cp and Cs) of each sample were obtained by the above measurement. The phosphorus content was calculated from this value by the following formula.

$$P \text{ mass\%} = Cp/(Cp+Cs) \times 100$$

Table 4 shows the phosphorus content of phosphorus sulfide by ICP-OES.

**Table 4**

| Phosphorus sulfide | A | B | C | D | E | F | G | H | I |
|---|---|---|---|---|---|---|---|---|---|
| Phosphorus content by ICP-OES (mass%) | 27.7 | 28.0 | 28.4 | 28.5 | 28.8 | 27.9 | 28.4 | 27.9 | 28.1 |
| Free sulfur (mass%) | 1.7 | 1.6 | <0.1 | 0.13 | <0.1 | 1.3 | 0.9 | 2.1 | 1.2 |
| Phosphorus content including free sulfur (mass%) | 27.2 | 27.6 | 28.4 | 28.5 | 28.8 | 27.5 | 28.1 | 27.3 | 27.8 |

(B) Free sulfur content

. Preparation of standard solution

To about 10 mg of sulfur powder (manufactured by Sigma-Aldrich Co. LLC, purity: 99.998%) in a closed container, 10mL of a solution of toluene: methanol=1: 1 (vol) (first solution) was added with a hole pipette, and the solution was shaken with an ultrasonic cleaner for about 30 minutes (Std1). The Std1 was weighed here (Std1 sulfur concentration: about 1 mg/1g-solution). The Std1 was allowed to cool at room temperature, stirred well, then taken up in 1mL with a hole pipette, pipetted into a 10mL volumetric flask, and then diluted with the first solution (Std2) (Std2 sulfur concentration: about 0.1 mg/1g-solution). The Std2 solution was thoroughly stirred, then taken up in 1mL with a hole pipette, pipetted into a 10mL volumetric flask, and then diluted with the first solution (Std3) (Std3 sulfur concentration: about 0.01 mg/1g-solution).

• Preparation of sample solution

To 10g of each phosphorus sulfide powder as a sample, 30mL of toluene and 160mL of methanol were added, and the mixture was stirred and heated at 45 °C for 1 hour and 60°C for 1 hour to react phosphorus sulfide with alcohol ($P_xS_y$ was reacted with methanol, dissolved in the solvent, and the free sulfur was dissolved without reacting). Then, another 30mL of toluene was added thereto, and nitrogen gas was flowed to remove $H_2S$ gas of the reaction by-product for hours while allowing the toluene to cool (fifth solution). 10mL (about 10g) was sampled from the fifth solution. A solution obtained by diluting the fifth solution 10-fold with the first solution was used as the sample solution.

• UHPLC (Ultra High-Performance Liquid Chromatography) measurements

Calibration curve solutions containing S were measured by UHPLC in the order of Std3, Std2, Std1. A calibration curve was prepared from the peak area values, and it was found that good linearity was exhibited.
After the calibration curve was prepared, the sample solution was introduced into a UHPLC, and the content of free sulfur was measured.
The measurement condition of UHPLC was as follows.

| | |
|---|---|
| Device: Waters ACQUITY UPLC H-class | |
| Columns: | Waters BEH C18 (2.1 mm×50 mm, 1.8 μm) |
| Mobile phase: | A) MilliQ water |
| | B) MeCN |
| | A/B = 25/75 Isocratic |
| Analysis time: | 10 min |
| Flow rate: | 0.6mL/min |
| Injection volume: | 2 μL |
| UV Detection wavelength :225 nm | |

The free sulfur content is shown in Table 4.

(C) Phosphorus content of phosphorus sulfide including free sulfur

The phosphorus content including free sulfur ($P_{all}$) was calculated from the phosphorus content by ICP-OES ($P_I$) and free sulfur content by HPLC ($S_R$) by the following formula.

$$P_{all} \text{ (wt\%)} = P_I \times (100\text{-}S_R)/100$$

Table 4 shows the phosphorus content of phosphorus sulfide including free sulfur.

Production Example 1

(Production of Lithium Sulfide (Li$_2$S))

In a 500mL-separable flask equipped with a stirrer, 200 g of LiOH anhydride (manufactured by Honjo Chemical Corporation) dried under an inert gas was prepared. The temperature was raised under a stream of nitrogen, and the internal temperature of the flask was maintained at 200 °C. Nitrogen gas was switched to hydrogen sulfide gas (Sumitomo Seika Chemicals Company, Limited) at a flow rate of 500mL/min, and LiOH anhydride and hydrogen sulfide were reacted.
Moisture generated by the reaction was condensed by a condenser and recovered. The reaction was carried out for 6 hours at which time 144mL of water was recovered. The reaction was continued for an additional 3 hours, but no moisture generation was observed.
The product powder was collected and measured for purity and XRD. As a result, the purity was 98.5%, and the peak pattern of Li$_2$S was confirmed by XRD.

Example 1

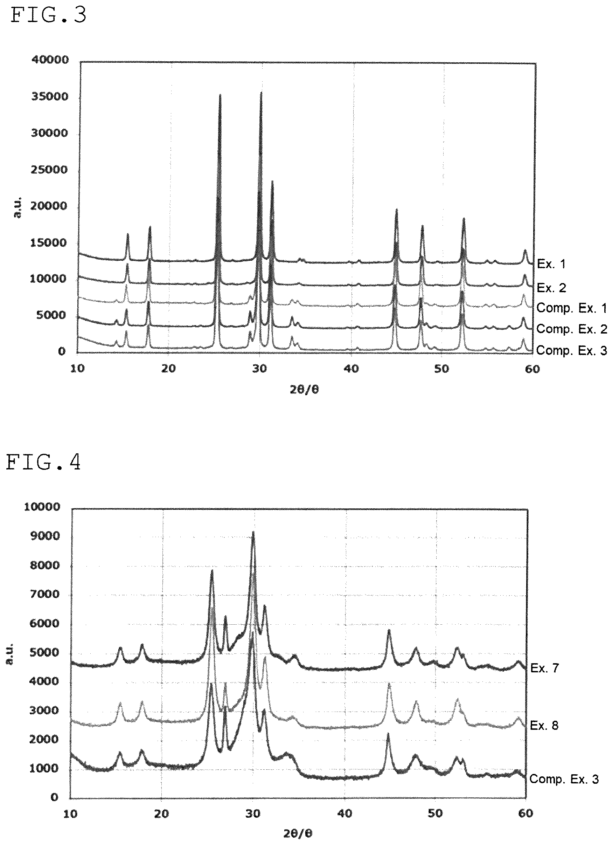

Lithium sulfide produced in Production Example 1 (purity: 98.5%), phosphorus sulfide A, lithium chloride (manufactured by Sigma Aldrich Co. LLC, purity: 99.9%) and lithium bromide (manufactured by Sigma Aldrich Co. LLC, purity: 99.9%) were used as starting materials (hereinafter, the purity of each starting material is the same in all Examples).
The raw materials were mixed so that molar ratios of lithium sulfide (Li$_2$S), phosphorus sulfide, lithium chloride (LiCl), and lithium bromide (LiBr) (Li$_2$S: phosphorus sulfide: LiCl: LiBr) were 47.5: 12.5: 25: 15. Specifically, 3.007g of lithium sulfide, 3.798g of phosphorus sulfide, 1.449g of lithium chloride, and 1.781g of lithium bromide were mixed to form the raw material mixture.
The raw material mixture and 600g of a zirconia ball having a diameter of 10 mm were put in a planetary ball mill (manufactured by Fritchu Corporation: Model No. P-5) zirconia pot (500mL) and completely sealed. The inside of the pot was an argon atmosphere. Treatment (mechanical milling) with a planetary ball mill at a rotational speed of 220 rpm for 40 hours gave a glassy powder (intermediate).
For the obtained intermediates, the ratio of phosphorus was evaluated by XRD and solid-state $^{31}$P-NMR measurements. Results are shown in Table 5. The XRD pattern of the intermediate is shown in Fig. 2.
Approximately 2g powder of the above-mentioned intermediate was packed into a Tamman tube (PT2, manufactured by Tokyo Garasu Kikai Co., Ltd.) in a glove box under an argon atmosphere, and the opening of the Tamman tube was closed with quartz wool, and sealed with a sealed container made of SUS so that the air could not enter. The sealed container was then placed in an electric furnace (FUW243PA, manufactured by Advantech Toyo Kaisha, Ltd.) and heat treated. Specifically, the temperature was raised from room temperature to 430 °C at 2.5 °C/min (raised to 430 °C in 3 hours) and held at 430 °C for 8 hours. Thereafter, the intermediate was gradually cooled, collected in a glove box under an argon atmosphere, and pulverized in a mortar to obtain a sulfide solid electrolyte.
The ionic conductivity, the pellet density, and the ratio of phosphorus contained in each structure of the obtained sulfide solid electrolyte were evaluated. Results are shown in Table 6. The XRD pattern of the obtained sulfide solid electrolyte is shown in Fig. 3.
Peaks derived from the argyrodite-type crystal structure were observed at 2θ=15.1, 18.0, 25.4, 29.9, 31.3, 44.9, 47.8, 52.3, and 59.1 deg.

Examples 2 to 6 and Comparative Examples 1 to 3

The intermediates were prepared and evaluated in the same manner as in Example 1 except that phosphorus sulfides B to I were used instead of phosphorus sulfide A, respectively, and sulfide solid electrolytes were prepared and evaluated. The results are shown in Tables 5 and 6.

**Table 5**

| | Phosphorus sulfide used | Ratio of phosphorus contained in each structure among phosphorus contained in the intermediates (mol%) | | |
|---|---|---|---|---|
| | | $PS_4^{3-}$ | $P_2S_7^{4-}$ | $P_2S_6^{4-}$ |
| Example 1 | A | 87.5 | 5.9 | 6.6 |
| Example 2 | B | 85.1 | 6.2 | 8.7 |

(continued)

| | Phosphorus sulfide used | Ratio of phosphorus contained in each structure among phosphorus contained in the intermediates (mol%) | | |
|---|---|---|---|---|
| | | $PS_4^{3-}$ | $P_2S_7^{4-}$ | $P_2S_6^{4-}$ |
| Comp. Ex. 1 | C | 85.1 | 4.3 | 10.6 |
| Comp. Ex. 2 | D | 82.9 | 3.3 | 13.8 |
| Comp. Ex. 3 | E | 78.2 | 4.9 | 16.9 |

**Table 6**

| | Phosphorus sulfide used | Pellet density (g/cm$^3$) | Ionic conductivity (mS/cm) | Ratio of phosphorus contained in each structure among phosphorus contained in the sulfide solid electrolyte (mol%) | | | | |
|---|---|---|---|---|---|---|---|---|
| | | | | Argyrodite 1 | Argyrodite 2 | Ar gyrodite 3 | Argyrodite 4 | New crystal |
| Example 1 | A | 1.823 | 10.0 | 10.9 | 29.0 | 43.6 | 15.4 | 0.0 |
| Example 2 | B | 1.814 | 11.0 | 8.9 | 33.0 | 41.1 | 15.7 | 0.0 |
| Comp. Ex. 1 | C | 1.847 | 7.2 | 21.6 | 21.7 | 42.6 | 11.5 | 1.2 |
| Comp. Ex. 2 | D | 1.900 | 8.1 | 16.5 | 28.5 | 41.9 | 9.2 | 2.4 |
| Comp. Ex. 3 | E | 1.782 | 6.3 | 19.1 | 28.6 | 38.2 | 9.5 | 2.3 |
| Example 3 | F | 1.735 | 10.4 | - | - | - | - | - |
| Example 4 | G | 1.744 | 11.3 | - | - | - | - | - |
| Example 5 | H | 1.750 | 10.5 | - | - | - | - | - |
| Example 6 | I | 1.865 | 11.7 | - | - | - | - | - |

Each measurement of intermediate and sulfide solid electrolytes was conducted as follows. (A) X-ray diffraction (XRD) measurement Circular pellets having a diameter of 10 mm and a height of 0.1 to 0.3 cm were molded from the powders produced in each Example to obtain samples. The samples were measured without exposure to air using an XRD airtight holder. The $2\theta$ position of the diffraction peak was determined by the centroid method using an XRD analysis program JADE.

Measurement was conducted under the following conditions using a powder X-ray diffractometer SmartLab manufactured by Rigaku Corporation.

Tube voltage: 45 kV

Tube current: 200 mA

X-ray wavelength: Cu-Ka (1.5418 Å)

Optical system: Parallel beam system

Slit configuration: Solar slit 5°, incident slit: 1 mm, light receiving slit: 1 mm

Detector: Scintillation counter

Measurement range: $2\theta$=10-60 deg

Step width, scan speed: 0.02 deg, 1 deg/min

In the analysis of the peak position for confirming the existence of the crystal structure from the measurement result, the peak position was obtained by drawing the baseline by cubic approximation using the XRD analysis program JADE.

(B) $^{31}$P-NMR Spectrum Analysis (Evaluation of ratio of phosphorus)

Approximately 100 mg of powder sample was loaded into an NMR-sample tube and $^{31}$P-NMR spectrum were obtained using the equipment and conditions described below. When phosphorus sulfide ($P_2S_5$) derived from the starting material is present in the intermediate (with $P_2S_5$) and when it is not present (without $P_2S_5$), the measuring condition differs. Prior to this measurement, a powder sample was subjected to a separate XRD measurement to confirm the presence or absence of $P_2S_5$. No $P_2S_5$ was present in the intermediate and sulfide solid electrolytes of the present Examples and Comparative Examples.

Equipment: ECZ400R Equipment (manufactured by JEOL RESONANCE Corporation)

Observation nucleus: $^{31}$P

Observation frequency: 161.944 MHz

Measurement temperature: Room temperature

Pulse sequence: Single pulse

Solid electrolyte without $P_2S_5$ 90° pulses were used.

Using 45° pulses of solid-electrolyte with $P_2S_5$

90° pulse width: 3.8µ

Waiting time after FID measurement until the next pulse application:

60 s (without $P_2S_5$)
1500 s (with $P_2S_5$)

Rotational speed of magic angle rotation:

12kHz (without $P_2S_5$)
15kHz (with $P_2S_5$)

Number of integrations

64 times (without $P_2S_5$)
32 times (with $P_2S_5$)

Measurement Range:

250 ppm to -150 ppm (without $P_2S_5$)
350 ppm to -250 ppm (with $P_2S_5$)

In measuring $^{31}$P-NMR spectra, chemical shifts were obtained using $(NH_4)_2HPO_4$ (chemical shift 1.33 ppm) as an external reference.

The ratios of phosphorus contained in $P_xS_y{}^{a-}$ structures among the phosphorus contained in the intermediates

was measured from $^{31}$P-NMR spectrum (the ratio of phosphorus, mol%).

(i) the case without $P_2S_5$

In the solid-state $^{31}$P-NMR spectrum measured in the range of 250 ppm to -150 ppm of the intermediate without $P_2S_5$ produced by the production method described in the present application, for example, a main peak appearing in the range of 70 to 120 ppm and a peak called a spinning sideband obtained at a chemical shift position by adding or subtracting a chemical shift width corresponding to a multiple of the rotational frequency of the magic angle from the chemical shift of the main peak are observed. The spinning sideband is a peak generated when the influence caused by the anisotropy of the electron orbital of P assigned to the main peak cannot be completely eliminated by the magic angle rotation, and the intensity thereof changes according to the intensity of the main peak and the rotation speed of the magic angle rotation. In the solid-state $^{31}$P-NMR spectrum of the intermediate without $P_2S_5$ measured under the above-mentioned condition, the ratio of the intensities of the spinning sideband to the main peak is smaller than 1/10, and the effect on the total area sum is small. Therefore, it was assumed that the peaks of the spinning sideband were separated into the respective structures at the same ratio as the area ratio obtained by the waveform separation of the main peaks, and the ratio of phosphorus of each structure was obtained by performing the waveform separation of only the main peak.

Waveform separation of the main peak was performed on the obtained solid-state $^{31}$P-NMR spectrum by analyzing peaks ranging from 70 to 120 ppm using the software "FT-NMR" (software recorded in the revised edition of "Data Processing of FT-NMR by Personal Computer" (second edition) (Sankyo Publishing)) to determine the separation peaks.

The software separates the peaks from the NMR signals (experimental values) in the solid-state $^{31}$P-NMR spectrum from 60 to 130 ppm using the nonlinear least squares method of chemical shifts and half-value range limits shown in Table 7 for glass and argyrodite-type crystal, respectively, to calculate the calculated value of the NMR signals and the residual sum of squares R2. When the maximum peak height was 1, the separation was completed when the residual sum of squares R2 within the analysis range of the experimental value and the calculated value was 0.007 or less and R2 was the smallest. The means and route of the peak fitting are not particularly limited, but the following points should be noted.

The fitting is started by inputting an initial value which is considered to be appropriate in the range shown in Table 7 to the various parameters. Parameters include peak position (ppm), peak height and peak half-value width (Hz). The software calculates the separated peak, the calculated value of the NMR signal, and the residual sum of squares R2 by the nonlinear least squares method, starting from the initial value.

For the peak fitting, a Gaussian function or a Pseudo-Voigt function (linear sum of a Gaussian function and a Lorentz function) is used. The function used is a Gaussian function for glass samples. On the other hand, a Gaussian function is used as a basis for the argyrodite-type crystals, and a Pseudo-Voigt function may be selected when the accuracy is poor. At the time of fitting, the ratio between the Gaussian function and the Lorentz function of the Pseudo-Voigt function is fixed during calculation, but the fixed value needs to be obtained as appropriate.

While finely correcting the above parameters, the fitting is repeated until R2 becomes 0.007 or less. When the chemical shift or the half-value width converges beyond the limit range of Table 7, the half-value width is fixed to the value of the limit range of Table 7, and fitting is repeated, and the chemical shift and the half-value width at which R2 becomes minimum in the range of 0.007 or less are selected.

When the argyrodite-type crystal and the glass are mixed, all the peaks in Table 7 are used for the fitting.

As a result of this waveform separation, peaks attributed to the $PS_4^{3-}$ structure, the $P_2S_7^{4-}$ structure, and the $P_2S_6^{4-}$ structure ($P_xS_y^{a-}$ structure) were detected in the range of 60 ppm to 130 ppm, and the areas of the peaks were defined as a1, a2, and a3, as shown in Table 7. The sum of the areas of these peaks (=a1+a2+a3) was taken as $S_a$.

Similarly, in the case of the sulfide solid electrolyte (heat-treated product), as shown in Table 7, peaks attributed to the argyrodite 1-4 and the new crystal (impurity crystal) were detected, and the areas of the peaks were defined as b1, b2, b3, b4, and b5. The sum of the areas of these peaks (=b1, b2, b3, b4, b5) was taken as $S_b$. Argyrodites 1-4 represent those having different distributions of free S and free halogens (CI, Br) coordinated around $PS_4^{3-}$ in argyrodite-type crystals, respectively.

**Table 7**

| Attribution | Chemical Shift (ppm) | Half-value width/Hz | Area |
|---|---|---|---|
| $PS_4^{3-}$ | 101~108 | 900~1300 | a1 |
| $P_2S_6^{4-}$ | 82~85 | 1000~1500 | a2 |
| $P_2S_7^{4-}$ | 91.4 | 1380 | a3 |

(continued)

| Attribution | Chemical Shift (ppm) | Half-value width/Hz | Area |
|---|---|---|---|
| Argyrodite 1 | 89.3-90.6 | 150-500 | b1 |
| Argyrodite 2 | 87.0-89.0 | 150-500 | b2 |
| Argyrodite 3 | 83.5-85.0 | 150-500 | b3 |
| Argyrodite 4 | 81.5-83.0 | 150-500 | b4 |
| New Crystal | 107-113 | 150-600 | b5 |

Among the phosphorus contained in the intermediate, the ratio of phosphorus (phosphorus ratio, mol%) contained in the $PS_4^{3-}$ structure, the $P_2S_7^{4-}$ structure, and the $P_2S_6^{4-}$ structure was determined by the following formula.

$$PS_4^{3-} \text{ phosphorus ratio} = 100 \times a1/S_a$$

$$P_2S_6^{4-} \text{ phosphorus ratio} = 100 \times a2/S_a$$

$$P_2S_7^{4-} \text{ phosphorus ratio} = 100 \times a3/S_a$$

Among the phosphorus contained in the sulfide solid electrolyte (heat-treated product), the ratio of phosphorus (phosphorus ratio, mol%) contained in the structure of argyrodite 1, the structure of argyrodite 2, the structure of argyrodite 3, the structure of argyrodite 4, and the new crystal were obtained by the following formula.

$$\text{Phosphorus ratio of argyrodite 1} = 100 \times b1/S_b$$

$$\text{Phosphorus ratio of argyrodite 2} = 100 \times b2/S_b$$

$$\text{Phosphorus ratio of argyrodite 3} = 100 \times b3/S_b$$

$$\text{Phosphorus ratio of argyrodite 4} = 100 \times b4/S_b$$

$$\text{Phosphorus ratio of new crystals} = 100 \times b5/S_b$$

(ii) the case with $P_2S_5$

In the solid-state $^{31}P$-NMR spectrum of the intermediate with $P_2S_5$ produced by the production method described in the present application measured in the range of 350 ppm to -250 ppm, in addition to the main peak in the vicinity of 70 to 120 ppm and the spinning sideband thereof observed in the solid electrolyte without $P_2S_5$, the main peak of $P_2S_5$ observed in the vicinity of 44 to 64 ppm and signals by the spinning sideband of $P_2S_5$ in the range of 134 to 158 ppm, -50 to -30 ppm and -145 to -130 ppm are observed. Therefore, first, the integrated values c1 to c6 of the respective peaks in the region shown in Table 8 were obtained. For the intermediate with $P_2S_5$ produced by the production method described in the present application, in the solid-state $^{31}P$-NMR spectrum obtained by measurement under the above-described measurement condition, the fluctuation range of the intensity of the signal in the region of 350 to 200 ppm in which the upper peak is not observed was defined as the maximum intensity of the noise (noise level), and integration was performed only on the peak having the intensity exceeding the noise level in the chemical shift region shown in Table 8. Further, the sum of these integrated values was defined as $S_c$ (=c1 +c2 +c3 +c4 +c5 +c6), and the sum of integrated values of peaks derived from $P_2S_5$ was defined as $S_d$ (=c1+c3+c5+c6).

**Table 8**

| Integration range (ppm) | Attribution | Integral value |
|---|---|---|
| 134~158 | $P_2S_5$ (Spinning sideband) | c1 |
| 70~120 | $PS_4^{3-}, P_2S_6^{4-}, P_2S_7^{4-}$ | c2 |
| 44~64 | $P_2S_5$ | c3 |
| -10~10 | $PS_4^{3-}, P_2S_6^{4-}, P_2S_7^{4-}$ (Spinning sideband) | c4 |
| -50~-30 | $P_2S_5$ (Spinning sideband) | c5 |
| -145~-130 | $P_2S_5$ (Spinning sideband) | c6 |

Next, the peaks derived from the $P_xS_y^{a-}$ structures were separated in the same manner as in (i), and the area values of the peaks and the sum of the areas $S_a$ were obtained.

The $PS_4^{3-}$ structure, the $P_2S_7^{4-}$ structure, the $P_2S_6^{4-}$ structure, and the phosphorus ratio (mol%) of phosphorus sulfide were obtained by the following formulae.

$$PS_4^{3-} \text{ phosphorus ratio} = 100 \times [a1/S_a] \times [(c2+c4)/S_c]$$

$$P_2S_6^{4-} \text{ phosphorus ratio} = 100 \times [a2/S_a] \times [(c2+c4)/S_c]$$

$$P_2S_7^{4-} \text{ phosphorus ratio} = 100 \times [a3/S_a] \times [(c2+c4)/S_c]$$

$$\text{Phosphorus sulfide phosphorus ratio} = 100 \times S_d/S_c$$

(C) Ionic conductivity measurement

The sulfide solid electrolyte produced in each Example was filled in a tablet molding machine, and a molding pressure of 407 MPa was applied to the molded body using a mini press machine. Carbon was placed on both sides of the molded body as an electrode, and pressure was applied again by a tablet molding machine, whereby a molded body for measurement (diameter: about 10 mm, thickness: 0.1 to 0.2 cm) was produced. The ionic conductivity of this molded body was measured by AC impedance measurement. The conductivity values at 25 °C were adopted.

(D) Pellet density

(C) In producing the ionic conductivity cell, the amount of sample was weighed (about 0.3g). Further, the pre-measured empty cell length and the thickness of the current collector were subtracted from the cell length after the molded body was produced, and the thickness of the molded body was calculated. These values were used to determine the pellet density.

$$\text{Pellet density (g/cm}^3\text{)} = \text{Sample weight (g)/ (Area of pellet (cm}^2\text{)} \times \text{Thickness of molded body (cm))}$$

Since the molded pellet was produced using a cell having a diameter of about 10 mm, the pellet area was 0.7854 cm$^2$.

Example 7

The raw materials were mixed so that the molar ratios of lithium sulfide ($Li_2S$), phosphorus sulfide A, phosphorus sulfide E, lithium chloride (LiCl) and lithium bromide (LiBr) ($Li_2S$: phosphorus sulfide: LiCl: LiBr) produced in Production Example 1 were 47.5: 12.5: 25.0: 15.0 (the molar amounts of phosphorus sulfide is a sum of the molar amounts of phosphorus sulfide A and phosphorus sulfide E). Specifically, 3.007g of lithium sulfide, 2.761g of phosphorus sulfide A, 1.037g of phosphorus sulfide E, 1.449g of lithium chloride, and 1.781g of lithium bromide were mixed to form the raw material mixture. The phosphorus content of phosphorus sulfide (total of phosphorus sulfide A and phosphorus sulfide E) at this time is 27.7 mass%.

The raw material mixture and 600g of a zirconia ball having a diameter of 10 mm were put in a planetary ball mill (manufactured by Fritchu Corporation: Model No. P-5) zirconia pot (500mL) and completely sealed. The inside of the pot was an argon atmosphere. Treatment (mechanical milling) with a planetary ball mill at a rotational speed of 220 rpm for 40 hours gave a glassy powder (intermediate).

For the obtained intermediates, the ratio of phosphorus was evaluated by XRD and solid-state $^{31}$P-NMR measurements. Results are shown in Table 9. The XRD pattern of the intermediate is shown in Fig. 4.

**Table 9**

| | Phosphorus sulfide used | Ratio of phosphorus contained in each structure among phosphorus contained in the intermediates (mol%) | | |
|---|---|---|---|---|
| | | $PS_4^{3-}$ | $P_2S_7^{4-}$ | $P_2S_6^{4-}$ |
| Example 7 | A+E | 78.7 | 10.9 | 10.4 |
| Example 8 | A+E | 86.4 | 5.8 | 7.8 |
| Comp. Ex. 3 | E | 78.2 | 4.9 | 16.9 |

Approximately 2 g powder of the above-mentioned intermediate was packed into a Tamman tube (PT2, manufactured by Tokyo Garasu Kikai Co., Ltd.) in a glove box under an argon atmosphere, and the opening of the Tamman tube was closed with quartz wool, and sealed with a sealed container made of SUS so that the air could not enter. The sealed container was then placed in an electric furnace (FUW243PA, manufactured by Advantech Toyo Kaisha, Ltd.) and heat treated. Specifically, the temperature was raised from room temperature to 430 °C at 2.5 °C/min (raised to 430 °C in 3 hours) and held at 430 °C for 8 hours. Thereafter, the intermediate was gradually cooled, collected in a glove box under an argon atmosphere, and pulverized in a mortar to obtain a sulfide solid electrolyte.

The ionic conductivity and the ratio of phosphorus contained in each structure of the obtained sulfide solid electrolyte were evaluated. Results are shown in Tables 10 and 11.

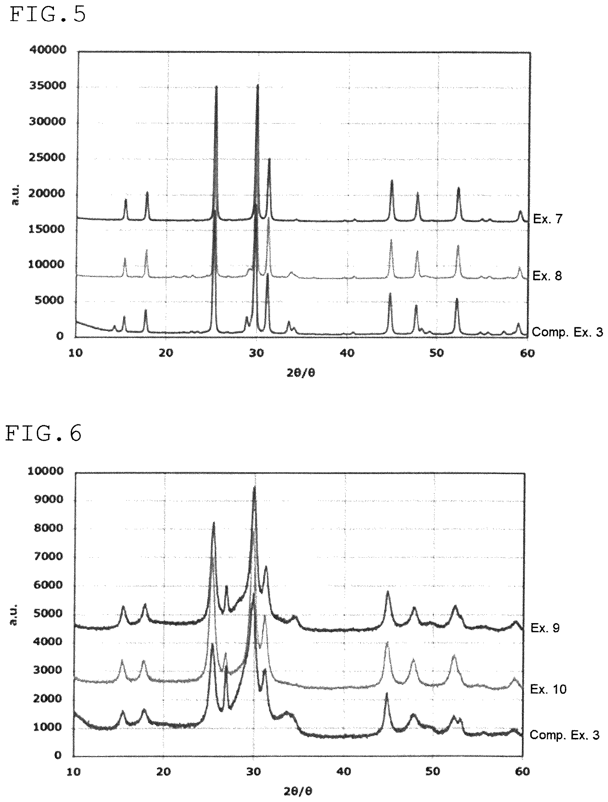

The XRD pattern of the obtained sulfide solid electrolyte is shown in Fig. 5. In the obtained sulfide solid electrolyte, peaks derived from the argyrodite-type crystal structure were observed at 2θ=15.1, 18.0, 25.4, 29.9, 31.3, 44.9, 47.8, 52.3, and 59.1 deg.

Table 10

| | Phosphorus sulfide used | Ratio of phosphorus contained in each structure among phosphorus contained in the sulfide solid electrolyte (crystal) (mol%) | | | | |
|---|---|---|---|---|---|---|
| | | Argyrodite 1 | Argyrodite 2 | Argyrodite 3 | Argyrodite 4 | New crystal |
| Example 7 | A+E | 9.3 | 36.6 | 36.9 | 16.7 | 0 |
| Example 8 | A+E | 9.4 | 34.1 | 37.1 | 14.4 | 0 |
| Comp. Ex. 3 | E | 19.1 | 28.6 | 38.2 | 9.5 | 2.3 |

Table 11

| | Phosphorus sulfide used | Ionic conductivity (mS/cm) |
|---|---|---|
| Example 7 | A, E | 11.3 |
| Example 8 | A, E | 10.5 |

(continued)

|  | Phosphorus sulfide used | Ionic conductivity (mS/cm) |
|---|---|---|
| Comp. Ex. 3 | E | 6.3 |

Example 8

The sulfide solid electrolytes was produced and evaluated in the same manner as in Example 7 except that as the raw material, 3.007g of lithium sulfide ($Li_2S$), 2.176g of phosphorus sulfide A, 1.622g of phosphorus sulfide E, 1.449g of lithium chloride (LiCl), and 1.781g of lithium bromide (LiBr) were mixed so that the molar ratio of lithium sulfide, phosphorus sulfide A, phosphorus sulfide E, lithium chloride and lithium bromide ($Li_2S$: phosphorus sulfide A+E: LiCl: LiBr) was 47.5: 12.5: 25.0: 15.0. The phosphorus content of phosphorus sulfide in Example 8 was 27.9 mass%. Results are shown in Tables 9 to 11.

As a result of the XRD measurement, in the obtained sulfide solid electrolyte, peaks derived from the argyrodite-type crystal structure were observed at $2\theta$=15.1, 18.0, 25.4, 29.9, 31.3, 44.9, 47.8, 52.3, and 59.1 deg.

Example 9

The raw materials were mixed so that the molar ratio of lithium sulfide ($Li_2S$) produced in Production Example 1, phosphorus sulfide E, elemental sulfur, lithium chloride (LiCl) and lithium bromide (LiBr) ($Li_2S$: phosphorus sulfide: elemental sulfur: LiCl: LiBr) were 46.3: 12.2: 2.5: 24.4: 14.6. Specifically, 3.007 g of lithium sulfide, 3.798 g of phosphorus sulfide, 0.113 g of elemental sulfur, 1.449 g of lithium chloride, and 1.781 g of lithium bromide were mixed to prepare the raw material mixture. The phosphorus content (phosphorus/(phosphorus sulfide+elemental sulfur)) at this time is 28.0 mass%.

The raw material mixture and 600 g of a zirconia ball having a diameter of 10 mm were put in a planetary ball mill (manufactured by Fritchu Corporation: Model No. P-5) zirconia pot (500mL) and completely sealed. The inside of the pot was an argon atmosphere. Treatment (mechanical milling) with a planetary ball mill at a rotational speed of 220rpm for 40 hours gave a glassy powder (intermediate).

The obtained intermediate was subjected to XRD measurement and solid-state $^{31}$P-NMR measurement to evaluate the phosphorus ratio. Results are shown in Table 12. The XRD pattern of the obtained intermediate is shown in Fig. 6.

Table 12

|  | Phosphorus sulfide used | Addition of elemental silfur | Ratio of phosphorus contained in each structure among phosphorus contained in the intermediates (mol%) | | |
|---|---|---|---|---|---|
|  |  |  | $PS_4^{3-}$ | $P_2S_7^{4-}$ | $P_2S_6^{4-}$ |
| Example 9 | E | with | 80.7 | 10.2 | 9.1 |
| Example 10 | E | with | 88.6 | 6.7 | 4.7 |
| Example 11 | E | with | 82.5 | 11.3 | 6.2 |
| Example 12 | E | with | 86.2 | 8.2 | 5.6 |
| Example 13 | E | with | 85.8 | 8.2 | 6.0 |
| Comp. Ex. 3 | E | without | 78.2 | 4.9 | 16.9 |

Approximately 2 g powder of the above-mentioned intermediate was packed into a Tamman tube (PT2, manufactured by Tokyo Garasu Kikai Co., Ltd.) in a glove box under an argon atmosphere, and the opening of the Tamman tube was closed with quartz wool, and sealed with a sealed container made of SUS so that the atmosphere could not enter. The sealed container was then placed in an electric furnace (FUW243PA, manufactured by Advantech Toyo Kaisha, Ltd.) and heat treated. Specifically, the temperature was raised from room temperature to 430 °C at 2.5 °C/min (raised to 430 °C in 3 hours) and held at 430 °C for 8 hours. Thereafter, the intermediate was gradually cooled, collected in a glove box under an argon atmosphere, and pulverized in a mortar to obtain a sulfide solid electrolyte.

The ionic conductivity and the ratio of phosphorus contained in each structure of the obtained sulfide solid electrolyte were evaluated. Results are shown in Tables 13 and 14.

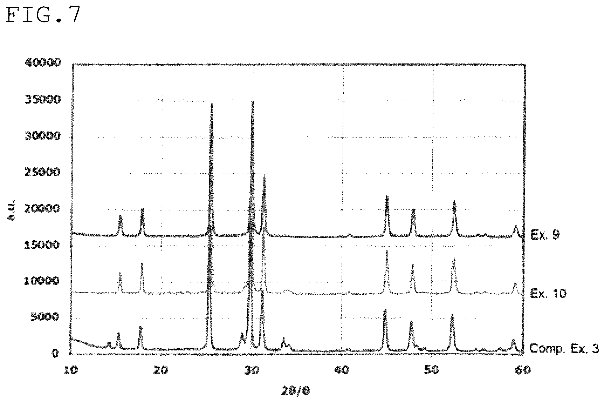

The XRD pattern of the obtained sulfide solid electrolyte is shown in Fig. 7. In the obtained sulfide solid electrolyte, peaks derived from the argyrodite-type crystal structure were observed at 2θ=15.1, 18.0, 25.4, 29.9, 31.3, 44.9, 47.8, 52.3, and 59.1 deg.

Table 13

| | Phosphorus sulfide used | Addition of elemental silfur | Ratio of phosphorus contained in each structure among phosphorus contained in the sulfide solid electrolyte (crystal) (mol%) | | | | |
| --- | --- | --- | --- | --- | --- | --- | --- |
| | | | Argyrodite 1 | Argyrodite 2 | Argyrodite 3 | Argyrodite 4 | New crystal |
| Example 9 | E | with | 4.9 | 38.2 | 35.4 | 18.7 | 0 |
| Example 10 | E | with | 8.9 | 40.1 | 28.5 | 16.5 | 0 |
| Example 11 | E | with | 9.0 | 29.2 | 50.3 | 8.1 | 0 |
| Example 12 | E | with | 5.4 | 31.0 | 49.3 | 9.6 | 0 |
| Example 13 | E | with | 4.2 | 26.8 | 51.1 | 12.7 | 0 |
| Comp. Ex. 3 | E | without | 19.1 | 28.6 | 38.2 | 9.5 | 2.3 |

Table 14

| | Phosphorus sulfide used | Ionic conductivity (mS/cm) |
| --- | --- | --- |
| Example 9 | E | 11.1 |
| Example 10 | E | 11.7 |
| Example 11 | E | 9.3 |
| Example 12 | E | 9.8 |
| Example 13 | E | 10.9 |
| Comp. Ex. 3 | E | 6.3 |

Example 10

The sulfide solid electrolytes was produced and evaluated in the same manner as in Example 9 except that as the raw material, 3.007g of lithium sulfide, 3.691g of phosphorus sulfide, 0.107g of elemental sulfur, 1.449g of lithium chloride, and 1.781g of lithium bromide were mixed so that the molar ratio of lithium sulfide ($Li_2S$), phosphorus sulfide E, elemental sulfur, lithium chloride (LiCl) and lithium bromide (LiBr) ($Li_2S$: phosphorus sulfide: elemental sulfur: LiCl: LiBr) was 46.5: 11.9: 2.4: 24.5: 14.7. The phosphorus content (phosphorus/(phosphorus sulfide+elemental sulfur)) of phosphorus sulfide at this time was 28.0 mass%. Results are shown in Tables 12 to 14.

As a result of the XRD measurement, in the obtained sulfide solid electrolyte, peaks derived from the argyrodite-type crystal structure were observed at 2θ=15.1, 18.0, 25.4, 29.9, 31.3, 44.9, 47.8, 52.3, and 59.1 deg.

Example 11

The sulfide solid electrolytes was produced and evaluated in the same manner as in Example 9 except that as the raw material, 3.007 g of lithium sulfide, 3.494 g of phosphorus sulfide, 0.303 g of elemental sulfur, 1.449 g of lithium chloride (LiCl), and 1.781 g of lithium bromide (LiBr) were mixed so that the molar ratio of lithium sulfide ($Li_2S$), phosphorus sulfide E, elemental sulfur, lithium chloride (LiCl) and lithium bromide ($Li_2S$: phosphorus sulfide: elemental sulfur: LiCl: LiBr) was 45.0: 10.8: 6.5: 23.5: 14.1. The phosphorus content (phosphorus/(phosphorus sulfide+elemental sulfur)) of phosphorus sulfide at this time was 26.5 mass%. Results are shown in Tables 12 to 14.
As a result of the XRD measurement, in the obtained sulfide solid electrolyte, peaks derived from the argyrodite-type crystal structure were observed at $2\theta$=15.1, 18.0, 25.4, 29.9, 31.3, 44.9, 47.8, 52.3, and 59.1 deg.

Example 12

The sulfide solid electrolyte was produced and evaluated in the same manner as in Example 9 except that as the raw material, 3.007g of lithium sulfide, 3.560g of phosphorus sulfide, 0.237 g of elemental sulfur, 1.449g of lithium chloride, and 1.781g of lithium bromide were mixed so that the molar ratio of lithium sulfide ($Li_2S$), phosphorus sulfide E, elemental sulfur, lithium chloride (LiCl) and lithium bromide (LiBr) ($Li_2S$: phosphorus sulfide: elemental sulfur: LiCl: LiBr) was 45.6: 11.2: 5.2: 23.8: 14.3. The phosphorus content (phosphorus/(phosphorus sulfide+elemental sulfur)) of phosphorus sulfide at this time was 27.0 mass%. Results are shown in Tables 12 to 14.
As a result of the XRD measurement, in the obtained sulfide solid electrolyte, peaks derived from the argyrodite-type crystal structure were observed at $2\theta$=15.1, 18.0, 25.4, 29.9, 31.3, 44.9, 47.8, 52.3, and 59.1 deg.

Example 13

The sulfide solid electrolyte was produced and evaluated in the same manner as in Example 9 except that as the raw material, 3.007 g of lithium sulfide, 3.626 g of phosphorus sulfide, 0.171 g of elemental sulfur, 1.449 g of lithium chloride, and 1.781 g of lithium bromide were mixed so that the molar ratio of lithium sulfide ($Li_2S$), phosphorus sulfide E, elemental sulfur, lithium chloride (LiCl) and lithium bromide(LiBr) ($Li_2S$: phosphorus sulfide: elemental sulfur: LiCl: LiBr) was 46.2: 11.5: 3.8: 24.1: 14.5. The phosphorus content (phosphorus/(phosphorus sulfide+elemental sulfur)) of phosphorus sulfide at this time was 27.5 mass%. Results are shown in Tables 12 to 14.
As a result of the XRD measurement, in the obtained sulfide solid electrolyte, peaks derived from the argyrodite-type crystal structure were observed at $2\theta$=15.1, 18.0, 25.4, 29.9, 31.3, 44.9, 47.8, 52.3, and 59.1 deg.
While embodiments and/or examples of the invention have been described in some detail above, those skilled in the art will readily make many changes to these illustrative embodiments and/or examples without materially departing from the novel teachings and advantages of the invention. Accordingly, many of these modifications are within the scope of the present invention.
The documents described in the specification and the specification of Japanese application(s) on the basis of which the present application claims Paris convention priority are incorporated herein by reference in its entirety.

**Claims**

1. A method for producing a sulfide solid electrolyte comprising an argyrodite-type crystal structure which comprises using phosphorus sulfide as the raw material, wherein the phosphorus sulfide has a phosphorus content of 28.3 mass% or less and contains free sulfur.

2. The method for producing a sulfide solid electrolyte according to claim 1, wherein the phosphorus sulfide has a phosphorus content of 28.0 mass% or less.

3. The method for producing a sulfide solid electrolyte according to claim 1, wherein the phosphorus sulfide has a phosphorus content of 27.7 mass% or less.

4. The method for producing a sulfide solid electrolyte according to any one of claims 1 to 3, wherein the phosphorus sulfide contains 0.2 to 2.5 mass% of free sulfur.

5. The method for producing a sulfide solid electrolyte according to claim 1, wherein the phosphorus content is adjusted by mixing two or more phosphorus sulfides having different phosphorus contents.

6. A method for producing a sulfide solid electrolyte comprising an argyrodite-type crystal structure, which comprises using the raw material obtained by adding elemental sulfur to phosphorus sulfide and adjusting a phosphorus content based on the total mass of the phosphorus sulfide and the elemental sulfur to 28.3 mass% or less.

7. The method for producing a sulfide solid electrolyte according to claim 6, wherein the phosphorus content based on the total mass of the phosphorus sulfide and the elemental sulfur is 28.0 mass% or less.

8. The method for producing a sulfide solid electrolyte according to claim 6, wherein the phosphorus content based on the total mass of the phosphorus sulfide and the elemental sulfur is 27.7 mass% or less.

9. The method for producing a sulfide solid electrolyte according to any one of claims 6 to 8, wherein the phosphorus sulfide does not contain free sulfur.

10. The method for producing a sulfide solid electrolyte according to any one of claims 1 to 9, which comprises using lithium halides the raw material.

11. The method for producing a sulfide solid electrolyte according to claim 10, which comprises using two or more types of lithium halide.

12. The method for producing a sulfide solid electrolyte according to any one of claims 1 to 11, comprising a step of heat treatment under an inert gas atmosphere.

13. The method for producing a sulfide solid electrolyte according to claim 12, wherein the heat treatment is performed at 420 to 470°C.

FIG.1

Chemical Shift / ppm

FIG.2

FIG.3

FIG.4

FIG.5

FIG.6

FIG.7

**EP 3 637 442 A1**

## INTERNATIONAL SEARCH REPORT

International application No.

PCT/JP2018/020047

A. CLASSIFICATION OF SUBJECT MATTER
Int.Cl. H01B13/00(2006.01)i, C01B25/14(2006.01)i, H01M10/052(2010.01)i, H01M10/0562(2010.01)i
According to International Patent Classification (IPC) or to both national classification and IPC

B. FIELDS SEARCHED

Minimum documentation searched (classification system followed by classification symbols)
Int.Cl. H01B13/00, C01B25/14, H01M10/052, H01M10/0562

Documentation searched other than minimum documentation to the extent that such documents are included in the fields searched
Published examined utility model applications of Japan 1922–1996
Published unexamined utility model applications of Japan 1971–2018
Registered utility model specifications of Japan 1996–2018
Published registered utility model applications of Japan 1994–2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2017-010936 A (IDEMITSU KOSAN CO., LTD.) 12 January 2017, paragraphs [0011], [0019], [0041], [0044] (Family: none) | 1-13 |
| Y | JP 2017-045613 A (IDEMITSU KOSAN CO., LTD.) 02 March 2017, paragraph [0006] (Family: none) | 1-13 |
| Y | WO 2016/104702 A1 (MITSUI MINING & SMELTING CO., LTD.) 30 June 2016, paragraphs [0015], [0031], [0037] & US 2017/0352916 A1, paragraphs [0021], [0050], [0059] & EP 3240089 A1 & KR 10-2017-0036793 A & CN 107112586 A | 1-13 |
| Y | JP 2017-033858 A (TOYOTA MOTOR CORP.) 09 February 2017, paragraph [0035] (Family: none) | 1-13 |

☐ Further documents are listed in the continuation of Box C. ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 21 June 2018 (21.06.2018) | Date of mailing of the international search report 03 July 2018 (03.07.2018) |
|---|---|
| Name and mailing address of the ISA/ Japan Patent Office 3-4-3, Kasumigaseki, Chiyoda-ku, Tokyo 100-8915, Japan | Authorized officer Telephone No. |

Form PCT/ISA/210 (second sheet) (January 2015)

29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010540396 A
- WO 2015011937 A
- WO 2015012042 A
- JP 2016024874 A
- WO 2016104702 A
- WO 201667631 A
- JP H07330312 A
- JP H09283156 A
- JP 2010163356 A
- JP 2011084438 A

**Non-patent literature cited in the description**

- *82nd proceedings of the Institute of Electrical Engineers of Japan,* 2015, 2H08
- Data Processing of FT-NMR by Personal Computer. Sankyo Publishing